# FASCICULE DE BREVET EUROPEEN

(11) **EP 0 474 560 B1**
(45) Date de publication et mention de la délivrance du brevet: **02.11.1994**
(21) Numéro de dépôt: 91402375.9
(22) Date de dépôt: 05.09.1991
(51) Int. Cl.: F16F 15/28, F01D 5/26, B25B 27/14

(54) **Outil de dépose de masses d'équilibrage sur turbine**
Handgerät zum Abnehmen von Turbinentilgermassen
Hand tool for removing balancing weights from a turbine

(30) Priorité: 05.09.1990 FR 9011004
(43) Date de publication de la demande: 11.03.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Ottone, Didier, F-77720 La Chapelle Gauthier (FR)
(74) Mandataire: Berrou, Paul

(56) Documents cités:
- DE-A- 2 726 540
- GB-A- 1 081 605
- US-A- 2 274 126
- US-A- 2 883 153
- US-A- 3 822 468
- US-A- 3 985 465
- US-A- 4 043 147

## Description

L'invention concerne un outil de dépose de masses d'équilibrage placées à la périphérie d'une roue de rotor d'une turbine. L'invention s'applique à la dépose de ces masses d'équilibrage sur toute turbine nécessitant une maintenance ou une révision du rééquilibrage de la turbine au banc moteur, la turbine étant équipée de sa tuyère.

L'invention s'applique tout particulièrement dans le domaine de l'avionique, aux turboréacteurs qui nécessitent une maintenance permanente pour laquelle le temps d'intervention doit être le plus court possible.

Le rotor des turbomachines tourne à des vitesses telles que le moindre déséquilibrage peut entraîner des vibrations extrêmement nuisibles. Pour éviter ces vibrations, il est donc nécessaire d'équilibrer ces rotors. On se sert généralement de minces masses d'équilibrage que l'on place en tête d'aube.

C'est le cas par exemple de la turbine à basse pression des moteurs CFM56 où l'on place de fines masses d'équilibrage entre deux plates-formes d'aube, à la périphérie de la roue du quatrième étage. Lorsqu'une intervention sur moteur avionné se pratique en maintenance, il arrive qu'il soit nécessaire de rééquilibrer la turbine sans démontage particulier.

Pour cela on utilise un outil capable de placer et de sertir les masses d'équilibrage entre deux aubes, à l'intérieur de la couronne périphérique formée par les têtes d'aubes du rotor, et cela en introduisant cet outil à travers une tuyère.

Si l'opération de sertissage de telles masses d'équilibrage à travers les tuyères de la turbomachine est relativement aisée, il n'en est pas de même de l'opération inverse qui consiste donc à dessertir les masses placées sur cette couronne périphérique car les risques de laisser tomber une masse dans le moteur pendant l'opération sont plus importants. Lorsqu'une masse d'équilibrage, qui vient d'être extraite, tombe entre deux étages de la turbine, il n'y a pas d'autre solution que de démonter la tuyère pour récupérer cette masse.

Il existe actuellement un outil qui permet de placer et de sertir des masses à la périphérie d'une roue de turbine sans avoir à démonter la tuyère, mais il n'existe pas d'outil fiable capable d'effectuer l'opération inverse sans prendre de risque, c'est pourquoi on procède au démontage de la tuyère pour effectuer la dépose de ces masses d'équilibrage.

On connait par ailleurs par US-A-4 043 147 l'utilisation d'une tige en tant qu'outil pour la mise en place d'une masse d'équilibrage à l'intérieur d'un arbre de turbine sans nécessiter un démontage important du moteur.

La présente invention a pour but de remédier à ce problème et propose un outil simple de dessertissage et d'extraction qui ne nécessite aucun démontage dans la turbine.

La présente invention a plus particulièrement pour objet un outil de dépose de masses d'équilibrage placées en tête des aubes d'une turbine, principalement caractérisé en ce qu'il comprend un bras articulé pouvant être introduit par l'arrière de la turbine, à travers la tuyère, sans aucun démontage, le bras comportant un manche tenu par l'opérateur pratiquant la manoeuvre de dépose, une partie extrême orientable à partir de mouvements communiqués au manche, cette partie extrême se terminant par une griffe susceptible de saisir la masse et de la dessertir sans la relâcher, un moyen d'articulation entre le manche et la partie extrême étant apte à transmettre à la griffe les mouvements pratiqués sur le manche suivant l'axe longitudinal du manche et permettant d'opérer un changement d'axe.

Selon un mode de réalisation, le manche et la partie extrême forment un ensemble télescopique, la partie extrême pouvant être déboîtée du manche, l'articulation étant réalisée par une chaînette reliant mécaniquement la manche et cette partie extrême.

La chaînette est logée à l'intérieur du manche et de la partie extrême formant le bras, ces deux parties étant constituées pour cela de tiges creuses.

Selon un autre mode de réalisation, l'articulation entre le manche et la partie extrême est réalisée par un cardan. Conformément à l'invention la griffe est solidaire de la partie extrême du bras.

Selon un aspect de l'invention, la griffe comporte un premier et un deuxième doigts destinés à emboîter respectivement un premier et un deuxième crochets de la masse d'équilibrage, l'opérateur venant accrocher le deuxième crochet dans le deuxième doigt par un mouvement latéral de droite à gauche, puis le premier doigt sous le premier crochet en levant le manche, avant d'exercer un effort de traction pour déboîter les deux parties de bras, puis un effort de poussée suivant un axe orthogonal à l'axe longitudinal du manche pour dégager le deuxième crochet de la masse d'équilibrage, et enfin un effort de poussée pour dégager le premier crochet, la masse restant prisonnière de la griffe.

D'autres caractéristiques et avantages de l'invention ressortiront mieux de la description qui va suivre, donnée à titre illustratif mais non limitatif, en référence aux dessins sur lesquels :
- la figure 1 représente le schéma simplifié d'un turboréacteur,
- la figure 2 représente le positionnement d'une masse d'équilibrage sur la périphérie d'une roue de turbine,
- la figure 3 représente le schéma d'une masse d'équilibrage,
- la figure 4 représente le schéma d'un outil conforme à l'invention,
- les figures 5A à 5F représentent l'outil de dépose conforme à l'invention, suivant les différentes étapes de la manoeuvre opérée pour une dépose.

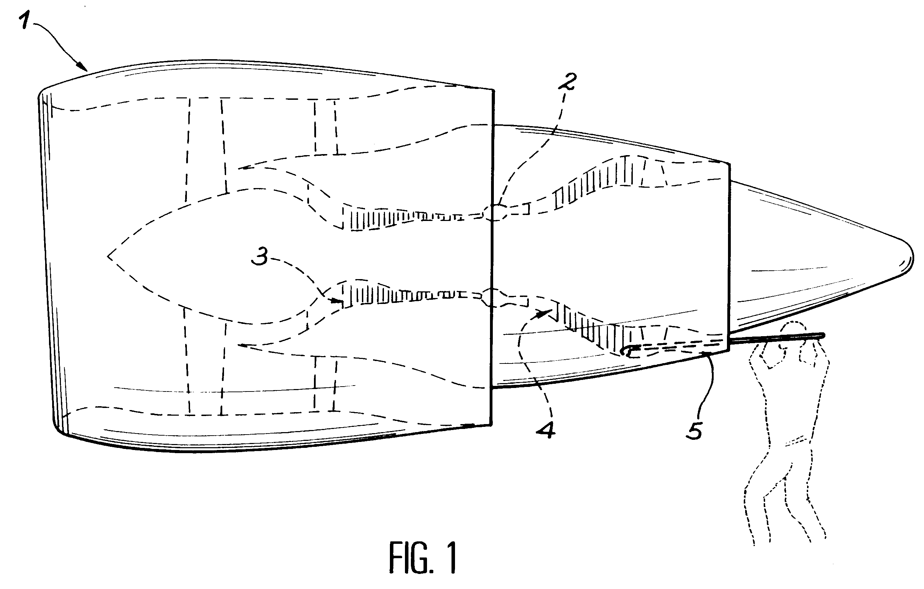

La figure 1 est représentée à titre d'exemple pour illustrer d'une manière générale une turbine. Il s'agit là plus exactement d'un turboréacteur sur lequel on peut voir la nacelle 1, les chambres à combustion 2, la partie compresseur 3, les différents étages de la turbine et la tuyère d'éjection 5.

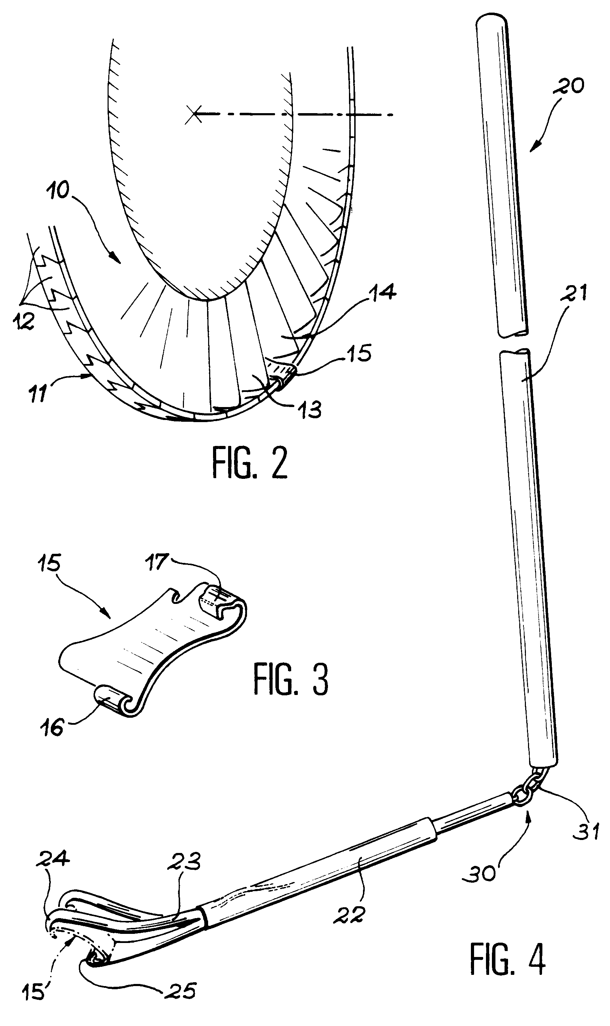

Sur la figure 2, on a représenté les détails de la périphérie 11 d'une roue 10 de turbine sur laquelle on peut voir une masse d'équilibrage 15 disposée entre deux aubes 13 et 14. La masse d'équilibrage 15 est généralement sertie sur la plate-forme 12 de tête d'aube, les plates-formes d'aubes formant la périphérie de la roue.

La masse d'équilibrage 15 représentée à titre d'exemple sur la figure 3 comporte deux crochets 16, 17, dont un est resserré lors de l'opération de sertissage sur la plate-forme 12 des aubes.

Ce sont ces deux crochets 16, 17, qu'il va être nécessaire de dégager des plates-formes 12 pour libérer la masse, sans toutefois la relâcher, et cela sans aucun démontage particulier de la turbine. Il va donc s'agir d'écarter le crochet 17 sertie, puis de dégager le crochet 16 pour réaliser la dépose de la masse.

L'outil conforme à l'invention et représenté sur la figure 4 comprend un bras articulé 20 dont une partie constituant un manche 21 peut être tenue et guidée par un opérateur, dont une autre partie, la partie extrême 22 de ce bras, est orientable à partir de mouvements communiqués au manche 21 par l'opérateur.

Cette partie extrême 22 comporte une griffe 23 qui permet, lorsqu'elle est positionnée à proximité d'une masse, de saisir cette masse, de la dessertir sans la relâcher pour l'extraire de la turbine.

Conformément à un mode particulier de réalisation, le bras 20 est télescopique, la partie extrême 22 pouvant se désemboîter du manche 21 à l'endroit de l'articulation 30 et l'articulation étant réalisée par une chaînette qui relie mécaniquement cette partie extrême 22 du manche 21.

Bien entendu, tout autre moyen d'articulation, un cardan par exemple, notamment du type à déclenchement à bille, peut réaliser la même fonction que ce système. En effet, il s'agit de transmettre à la griffe les mouvements pratiqués sur le manche suivant l'axe longitudinal du manche et de pouvoir opérer un changement d'axe.

Selon le mode de réalisation qui est représenté, le manche 21 et la partie extrême 22 sont des pièces creuses constituant des tiges, à l'intérieur desquelles est logée la chaînette 31. La chaînette peut être fixée sur l'une de ces deux pièces et avoir un ressort de rappel qui permet par exemple de réemboîter la partie extrême dans le manche.

La partie terminale de ce bras constitue une griffe 23 qui est solidaire de la partie extrême 22. Cette griffe 23 a pu par exemple être fabriquée séparément puis fixée sur la partie extrême. Cette disposition va permettre de pouvoir interchanger la griffe dans le cas où l'on a besoin de dessertir des masses n'ayant pas les mêmes formes, ni les mêmes dimensions.

La griffe 23 comporte deux doigts de forme et de dimension adaptées aux masses à dessertir, un premier doigt 24 étant apte à s'emboîter autour d'un des crochets de la masse à dessertir, le deuxième doigt 25 étant apte à s'adapter autour du deuxième crochet de cette masse.

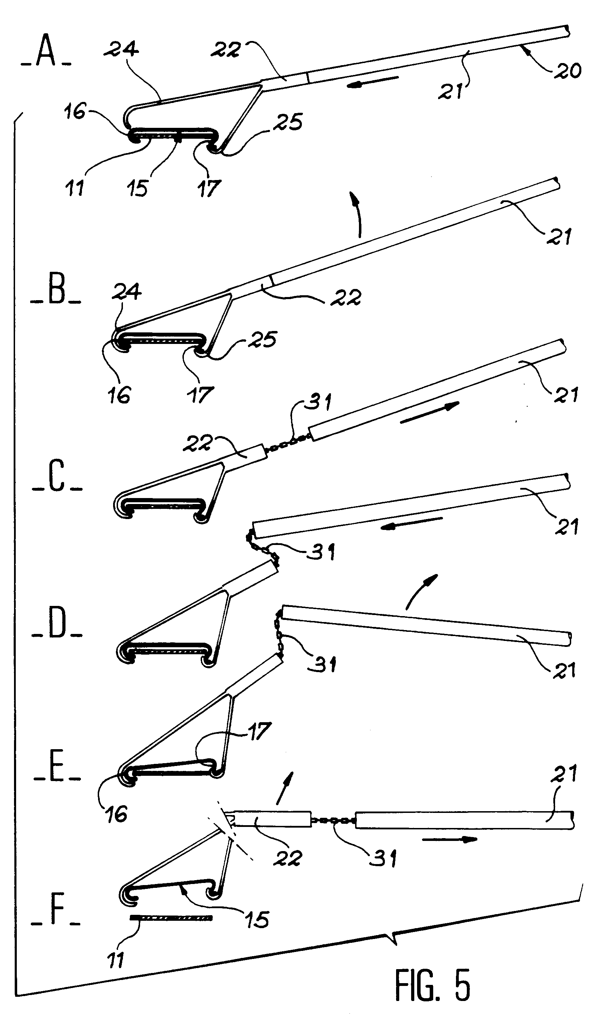

Les figures 5A à 5F représentent l'outil conforme à l'invention dans chacune des étapes opérées par l'utilisateur qui réalise l'opération de dessertissage d'une masse d'équilibrage de la turbine.

Lors d'une opération de dessertissage, l'outil est introduit au tavers de la tuyère 5 à proximité de la plate-forme de tête des aubes, entre deux aubes, où se situe une masse d'équilibrage.

A l'étape A, l'opérateur en poussant le bras 20 vient caler l'un des deux doigts 25 contre un deuxième crochet 17 de la masse à dessertir. Ce doigt vient se glisser sous le bord serti de la masse, par un mouvement latéral de droite à gauche.

A l'étape B, l'outil est levé (suivant le sens de la flèche indiqué sur cette figure) de manière à venir encliqueter le premier doigt 24 sous le bord courbe de la masse, c'est-à-dire sous le premier crochet 16.

A l'étape C, le débattement de l'outil dans la tuyère étant faible à cause de la présence du cône d'échappement, le manche 21 de l'outil est tiré vers l'opérateurs de manière à être dégagé de sa partie extrême 22.

A l'étape D, les deux parties de l'outil étant reliées par la chaînette 30, l'opérateur exerce un effort de poussée sur le manche 21 pour appliquer le bras de levier et de ce fait dessertir la masse d'équilibrage, et dégager celle-ci de la tête d'aube.

A l'étape E, l'opérateur soulève le manche pour dégager l'outil des aubages et à l'étape F, l'opérateur réalise l'extraction de la masse au travers de la tuyère suivant le sens des flèches.

Les étapes C et D sont simplifiées lorsque le système télescopique et la chaînette sont remplacés par un cardan à bille.

L'outil conforme à l'invention permet donc une rapidité d'exécution en toute sécurité et sans démontage particulier en maintenance dans les compagnies aériennes ou en révision (lorsqu'il s'agit de réaliser un rééquilibrage de la turbine au banc moteur équipé de sa tuyère). De par sa forme et sa concept ion, l'outil permet donc d'agir sans démontage particulier dans une turbine au travers de la tuyère d'éjection, malgré le faible débattement qu'il peut y avoir dans une tuyère à cause de la présence du cône d'échappement.

## Revendications

1. Outil de dépose de masses d'équilibrage placées sur la plate-forme de tête des aubes d'une turbine, caractérisé en ce qu'il comprend un bras (20) articulé pouvant être introduit par une tuyère (5) de la turbine sans aucun démontage, le bras comportant un manche tenu (21) par l'opérateur pratiquant la manoeuvre de dépose, une partie extrême (22) orientable à partir de mouvements communiqués au manche, cette partie extrême se terminant par une griffe (23) susceptible de saisir la masse et de la dessertir sans la relâcher, un moyen d'articulation (30) entre le manche (21) et la partie extrême (22) étant apte à transmettre à la griffe (23) les mouvements pratiqués sur le manche (21) suivant l'axe longitudinal du manche et permettant d'opérer un changement d'axe.

2. Outil de dépose selon la revendication 1, caractérisé en ce que le manche (21) et la partie extrême (22) forment un ensemble télescopique, la partie extrême (22) pouvant être déboîtée du manche (21), l'articulation étant réalisée par une chaînette (31) reliant mécaniquement le manche et cette partie.

3. Outil de dépose selon la revendication 1 ou 2, caractérisé en ce que le manche (21) et la partie extrême (22) sont formés de tiges creuses à l'intérieur desquelles est logée la chaînette (31).

4. Outil de dépose selon la revendication 1, caractérisé en ce que l'articulation (30) entre le manche et la partie extrême est réalisée par un cardan à déclenchement à bille.

5. Outil de dépose selon l'une quelconque des revendications 1 à 4, caractérisé en ce que la griffe (23) est solidaire de la partie extrême (22) du bras (20).

6. Outil de dépose selon la revendication 5, caractérisé en ce que la griffe (23) comporte un premier (24) et un deuxième (25) doigts destinés à emboîter respectivement un premier (16) et un deuxième (17) crochets de la masse (15) d'équilibrage, l'opérateur venant accrocher le deuxième crochet (17) dans le deuxième doigt (25) par un mouvement latéral de droite à gauche puis le premier doigt (24) sous le premier crochet (16) en levant le manche (21), avant d'exercer un effort de traction pour déboîter les deux parties (21, 22), puis un effort de poussée suivant un axe orthogonal à l'axe longitudinal du manche pour dégager le deuxième crochet (17) de la masse d'équilibrage et enfin un effort de poussée pour dégager le premier crochet (16), la masse (15) restant prisonnière de la griffe (23).

## Claims

1. Tool for removing balance weights placed on the blade tip platforms of a turbine, characterised in that it comprises an articulated arm (20) capable of being inserted through a tail pipe (5) of the turbine without any dismantling, the arm comprising a sleeve (21) held by the operator carrying out the manoeuvre of removal, an end portion (22) orientable by means of movements imparted to the sleeve, this end portion terminating in a claw (23) able to grip the weight and de-crimp it without letting go of it, a means of articulation (30) between the sleeve (21) and the end portion (22) being able to transmit to the claw (23) the movements carried out on the sleeve (21) in a longitudinal axis of the sleeve and permitting a change of axis to be effected.

2. Removal tool in accordance with Claim 1, characterised in that the sleeve (21) and the end portion (22) form a telescopic whole, the end portion (22) being able to be unplugged from the sleeve (21), the articulation being achieved by a light chain (31) mechanically linking the sleeve and this portion.

3. Removal tool in accordance with Claims 1 or 2, characterised in that the sleeve (21) and the end portion (22) are formed of hollow rods inside which is housed the chain (31).

4. Removal tool in accordance with Claim 1, characterised in that the articulation (30) between the sleeve and the end portion is formed by a releasable ball joint.

5. Removal tool in accordance with any of Claims 1 to 4, characterised in that the claw (23) is an integral part of the end portion (22) of the arm (20).

6. Removal tool in accordance with Claim 5, characterised in that the claw (23) comprises a first (24) and a second (25) finger designed to engage respectively with a first (16) and a second (17) hook on the balance weight (15), the operator hooking the second hook (17) in the second finger (25) by a sideways movement from right to left, then the first finger (21) under the first hook (16), before exerting a pull to uncouple the two parts (21), (22), then a push along an axis orthogonal to the longitudinal axis of the sleeve to free the second hook (17) of the balance weight and finally a push to free the first hook (16), the weight (15) remaining captive in the claw (23).

## Patentansprüche

1. Werkzeug zum Abnehmen von Auswuchtmassen, die auf der Kopfplatte von Turbinenschaufeln angebracht sind,
**dadurch gekennzeichnet,**
daß das Werkzeug einen Gliederarm (20) aufweist, der durch eine Düse (5) der Turbine ohne Demontage einführbar ist, wobei der Arm ein Griffstück (21) aufweist, das durch den Bediener gehalten wird, der den Abnahmevorgang durchführt, und
ein Endstück (22), das ausgehend von auf das Griffstück übertragenen Bewegungen ausrichtbar ist, wobei das Endstück in einem Greifer (23) endet, der geeignet ist das Massenstück zu ergreifen und abzunehmen, ohne es loszulassen, wobei eine Gelenkeinrichtung (30) zwischen dem Griffstück (21) und dem Endstück (22) die auf das Griffstück (21) ausgeübten Bewegungen auf den Greifer (23) entlang der Längsachse des Griffstücks überträgt und eine Achsenänderung ermöglicht.

2. Abnahmewerkzeug nach Anspruch 1,
**dadurch gekennzeichnet,**
daß das Griffstück (21) und das Endstück (22) eine Teleskopanordnung bilden, wobei das Endstück (22) aus dem Griffstück (21) herausziehbar ist und das Gelenk durch eine kleine Kette (31) ausgeführt ist, die das Griffstück und das Endstück mechanisch miteinander verbindet.

3. Abnahmewerkzeug nach Anspruch 1 oder 2,
**dadurch gekennzeichnet,**
daß das Griffstück (21) und das Endstück (22) durch Hohlstangen gebildet sind, in deren Inneren die kleine Kette (31) angeordnet ist.

4. Abnahmewerkzeug nach Anspruch 1,
**dadurch gekennzeichnet,**
daß das Gelenk (30) zwischen dem Griffstück und dem Endstück durch ein Kardangelenk mit Kugelauslösung ausgeführt ist.

5. Abnahmewerkzeug nach einem der Ansprüche 1 bis 4,
**dadurch gekennzeichnet,**
daß der Greifer (23) einstückig mit dem Endstück (22) des Armes (20) ist.

6. Abnahmewerkzeug nach Anspruch 5,
**dadurch gekennzeichnet,**
daß der Greifer (23) einen ersten (24) und zweiten Finger (25) aufweist, einen ersten (16) bzw. einen zweiten Haken (17) der Auswuchtmasse (15) zu umfassen, nachdem der Bediener durch eine Querbewegung von rechts nach links den zweiten Haken (17) in den zweiten Finger (25) und dann durch Anheben des Griffstücks (21) den ersten Finger (24) unter den ersten Haken (16) einhängt, bevor er eine Zugbewegung zum Auseinanderziehen der beiden Teile (21, 22) ausführt, dann eine Schubbewegung längs einer Achse orthogonal zur Längsachse des Griffes zum Lösen des zweiten Hakens (17) der Auswuchtmasse ausführt und schließlich eine Schubbewegung zum Lösen des ersten Hakens (16) ausführt, wobei das Massenstück (15) in dem Greifer (23) festgehalten bleibt.
